# EUROPEAN PATENT SPECIFICATION

(11) **EP 4 252 887 B1**
(45) Date of publication and mention of the grant of the patent: **12.03.2025**
(21) Application number: 22164761.3
(22) Date of filing: 28.03.2022
(51) Int. Cl.: B01D 46/10, B01D 46/52

(54) **FILTER SYSTEM AND FILTER ELEMENT**
FILTERSYSTEM UND FILTERELEMENT
SYSTÈME DE FILTRE ET ÉLÉMENT DE FILTRE

(43) Date of publication of application: 04.10.2023
(73) Proprietor: MANN+HUMMEL GmbH, 71636 Ludwigsburg (DE)
(72) Inventor: KANG, Jungmin, 17038 Yongin-si, Gyeonggi-do (KR)
(74) Representative: Mann + Hummel Intellectual Property

(56) References cited:
- EP-A1- 2 463 009
- DE-A1- 102014 009 026
- DE-A1- 102015 007 901
- DE-A1- 102015 015 778
- DE-A1- 102016 006 042
- US-A1- 2013 305 930

## Description

### Technical Field

The invention relates to a filter system, in particular an air filter system and to a filter element for a filter system.

### Prior Art

US 2013/0305930 A1 discloses an air cleaner assembly having improved dynamic wall stiffness includes an air filter element having a filter media for filtering an air stream in the air cleaner. The filter element includes a substantially rigid frame member that surrounds a flow aperture covered by the filter media. Having a frame member, the frame member supports the filter media and has a frame body that circumferentially surrounds the flow aperture. A flange for mounting the filter element in an air cleaner housing is secured to the frame body or otherwise secured to the filter element and extend generally outwardly relative to the flow aperture. To provide further improved dynamically stiffening of the walls of the air cleaner, the filter element is provided with one or more wall stiffening members. The stiffening members include elongated locking members secured and positioned at opposing sidewalls of the filter element. Having a frame member, the locking members are secured onto the frame member and positioned at opposing sidewalls of the filter element. The locking members extend in an axial flow direction at least partially along the depth of the sidewall of the filter element. Having at least one stiffening rib, the substantially rigid elongated stiffening rib extends laterally across the flow aperture proximate to the filter media between the two locking members at the opposing filter sides. The stiffening rib or ribs is secured at opposing ends to a respective one of the locking members.

### Disclosure of the Invention

It is an object of the invention to provide a stable filter system, in particular an air filter system, being easily to assemble or disassemble.

Another object is to provide a filter element for a filter system, in particular an air filter system, being easily to assemble or disassemble

According to an aspect of the invention the first object is achieved by a filter system, in particular an air filter system, comprising a housing comprising a first housing part and a second housing part, a fluid inlet formed in the first housing part, a fluid outlet formed in the second housing part, and a filter element being accommodated in the housing, and comprising a filter body with a filter medium enclosed by a circumferential frame element, and structure elements protruding from a circumference of the filter element, the structure elements comprising grooves respectively in circumference walls of the structure elements. The first housing part comprises a receiving part for receiving the filter element, the receiving part comprising counter elements respectively corresponding to the structure elements, and the counter elements being breakthroughs that are arranged circumferentially on and formed through a wall of the receiving part. The grooves included in the structure elements are for receiving edges of the breakthroughs of the counter elements in a sealing manner when the filter element is arranged in the receiving part.

Advantageous embodiments are described in the dependent claims, the description and the drawings.

Advantageously the counter elements are complementarily formed to the structure elements. Thus the structure elements and the counter elements are fitting tightly when the filter element is mounted to the first housing part.

By this way the filter element may easily be mounted to the first housing part and/or easily dismounted for replacement of the filter element.

A further advantage of this design of structure elements and counter elements is that these elements may stiffen the housing when the filter element is mounted to the first housing part. Therefore any stiffening ribs of the housing which may be needed otherwise may be replaced by the cooperation of the structure elements and the counter elements.

Thus according to embodiments of the invention an easy mounting of the filter element into the housing of the filter system together with a stiffened housing may be achieved. Also a weight of the filter system may advantageously be reduced by this way.

The counter elements may be realized as slots in a wall of the receiving part, where the structure elements may be inserted when the filter element is mounted to the first housing part. Advantageously the housing is sealed against the environment when the filter element is mounted into the housing as the slots are then closed by the structure elements. Thus no harmful particles or fluids from the environment may enter an inside of the housing.

By this way the counter elements and thus the housing may be sealed by the structure elements when the filter element is mounted to the housing.

The counter elements are inserted into the circumference of the filter element when the filter element is mounted to the housing. Advantageously the housing may be stiffened by the cooperation of the structure elements and the counter elements and also the filter element may be sealed against a raw fluid section of the first housing part.

According to a favorable embodiment of the filter system, the structure elements may be formed with a tapered shape in a mounting direction. Advantageously mounting of the filter element into the first housing part may be facilitated.

According to a favorable embodiment of the filter system, the second housing part may comprise a protruding edge overlapping the first housing part when mounted on top of the first housing part. By this way easy placement of the second housing part on top of the first housing part is possible as well as reliable sealing of the housing against the environment.

According to a favorable embodiment of the filter system, the first housing part may further comprise one or more snap hooks for closing the housing by respectively fitting into one or more grooves included in the second housing part. By this way easy mounting of the second housing part on top of the first housing part is possible as well as reliable connection of the first housing part and the second housing part and sealing of the housing against the environment.

According to a favorable embodiment of the filter system the structure elements may be integral with a side wall at least partially surronding the filter body, and/or may be integral with the circumferential frame element. Advantageously production of the filter system may be optimized due to reduced production cost of the single parts of the filter element and the housing.

### Brief Description of the Drawings

The present invention together with the above-mentioned and other objects and advantages may best be understood from the following detailed description of the embodiments, but not restricted to the embodiments, wherein is shown in:
- Figure 1: a filter system with a first housing part and a filter element according to an embodiment of the invention in an exploded view;
- Figure 2: a detailed view of a structure element of the filter element according to Figure 1;
- Figure 3: the filter element according to Figure 1 during a mounting process into the first housing part;
- Figure 4: the filter element according to Figure 1 inserted into the first housing part; and
- Figure 5: a filter system according to an embodiment of the invention with a filter element inserted and the housing closed.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

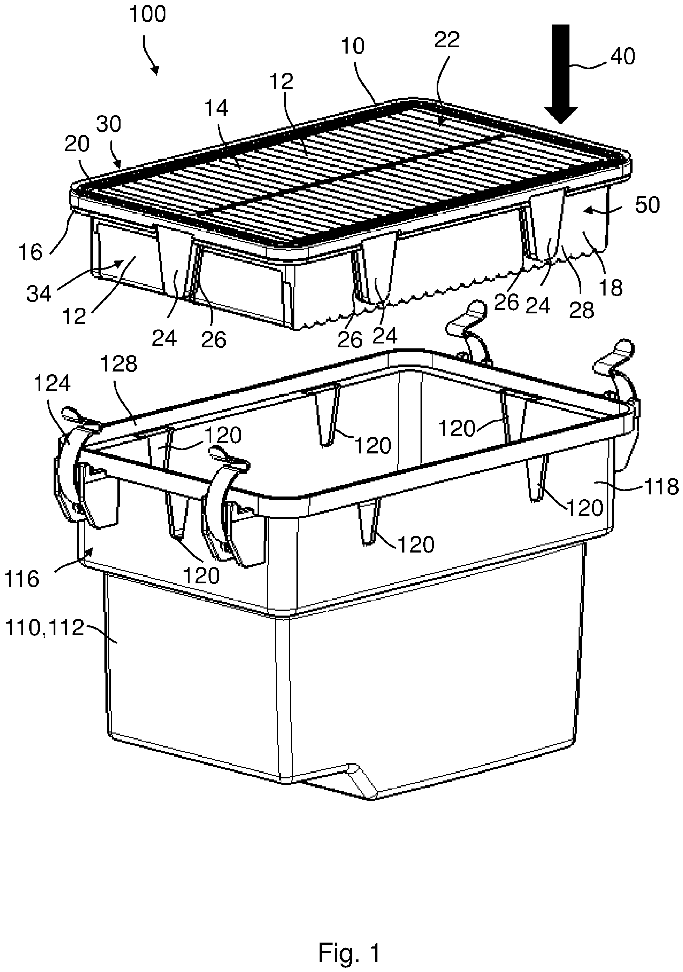

Figure 1 depicts a filter system 100, in particular an air filter system 100, with a first housing part 112 and a filter element 10 according to an embodiment of the invention in an exploded view.

The filter system 100 comprises a housing 110, where in Figure 1 only the first housing part 112, which is the lower part of the housing 110, is shown. Further the filter system 100 comprises the filter element 10 which in an intended use is accommodated in the housing 110.

The filter element 10 comprises a filter body 12 with a filter medium 14, e.g. a pleated nonwoven, which is enclosed by a circumferential frame element 16. The frame element 16 supports a gasket 20 between the raw side and the clean side of the filter system 100.

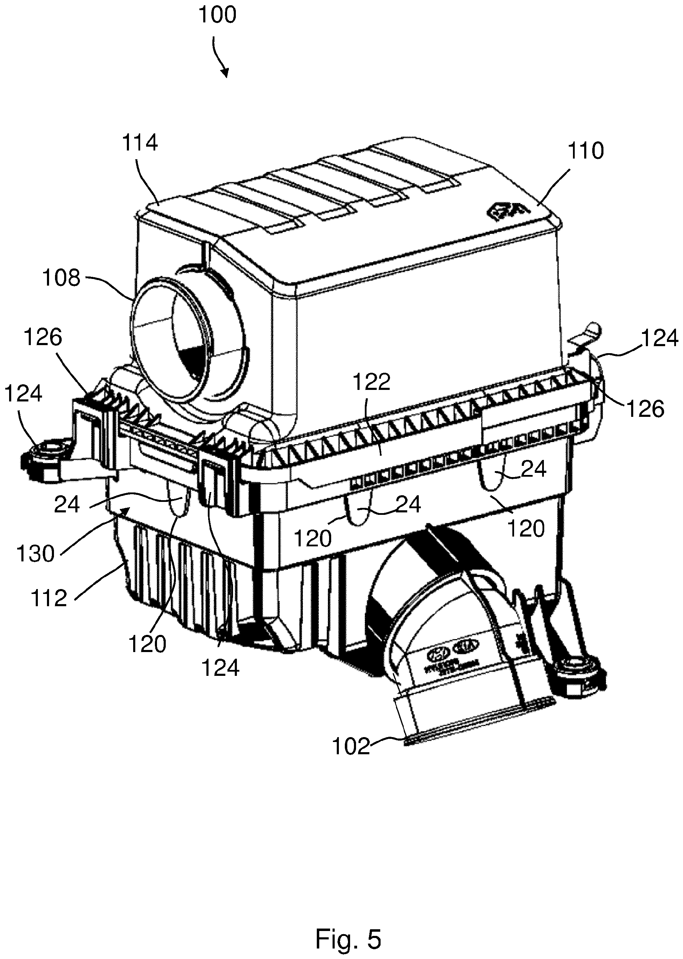

A receiving part 116 is provided on the first housing part 112 for receiving the filter element 10. The frame element 16 fits into a flange 128 of the receiving part 116 when the filter element 10 is mounted to the first housing part 112 so that the gasket 20 of the frame element 16 is received by a sealing surface of a second housing part 114 (Figure 5) when closing the first housing part 112.

A number of structure elements 24 are arranged on a circumference 50 of the filter element 10, e.g. in a side wall 18 of the circumference 50 and as part of the frame element 16, respectively.

The receiving part 116 provides a number of corresponding counter elements 120 for cooperating with the structure elements 24. The counter elements 120 are arranged circumferentially on a wall 118 of the receiving part 116.

The structure elements 24 and the counter elements 120 form a tight connection when the filter element 10 is arranged in the receiving part 116.

The structure elements 24 are protruding from the circumference 50 of the filter element 10, whereas the counter elements 120 are configured as breakthroughs, e.g. slots, through the wall 118 of the receiving part 116. So the structure elements 24 fit into the counter elements 120 when the filter element 10 is mounted to the first housing part 112.

The structure elements 24 are formed with a tapered shape 28 in a mounting direction 40. This facilitates mounting of the filter element 10 into the first housing part 112 as the structure elements 24 are self-centering in the counter elements 120 when the filter element 10 is moved in the mounting direction 40.

The structure elements 24 are integral with the side walls 18 which at least partially surround the filter body 12. On a front side 34 the structure elements 24 are integral with the frame element 16 because the front side 34 is represented as the filter body 12 in this embodiment. In an alternative embodiment the side walls 18 may be realized on the whole circumference 50.

In an alternative embodiment the structure elements 24 could be breakthroughs through the side wall 18 arranged at the circumference 50 of the filter element 10, and the counter elements 120 could be protruding inward from the wall 118 of the receiving part 116. Such a configuration would also facilitate mounting of the filter element 10 to the first housing part 112 as the counter elements 10 would also fit into the structure elements 24.

The gasket 20 is circumferentially arranged on a top side 30 of the frame element 16 and serves for sealing the raw fluid region inside the housing 110 of the filter system 100 against the filtered fluid region when the housing 110 is closed. The top region 22 of the filter body 12 directs to the filtered fluid region.

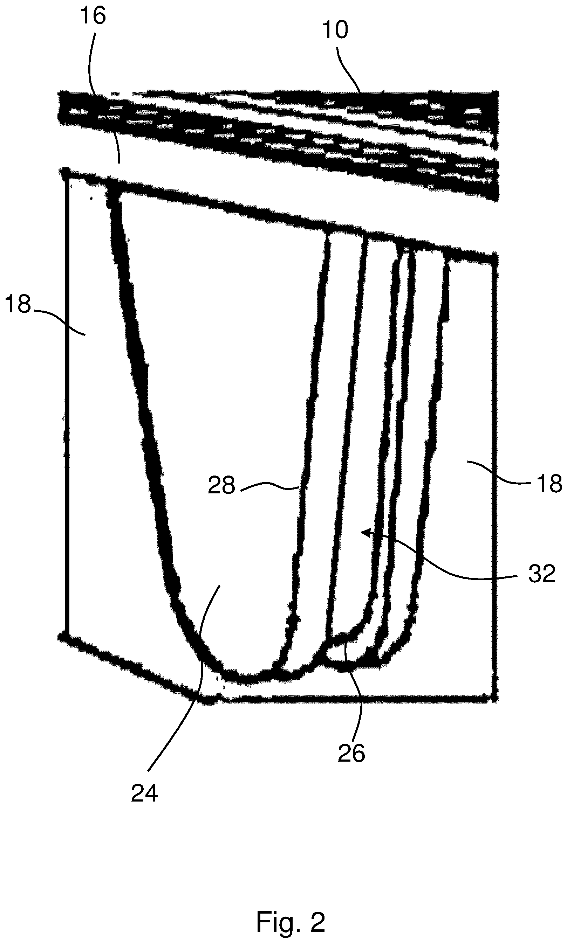

Figure 2 depicts a detailed view of a structure element 24 of the filter element 10 according to Figure 1.

As is to be seen the structure elements 24 comprise grooves 26 in a circumference wall 32 for receiving edges of the counter elements 120 of the wall 118 of the receiving part 116 in a sealing manner, when the filter element 10 is being inserted into the receiving part 116. Thus the housing 110 is sealed against the environment when the filter element 10 is inserted into the first housing part 112 and no harmful particles or fluid may enter the housing 110 when the filter element 10 is mounted.

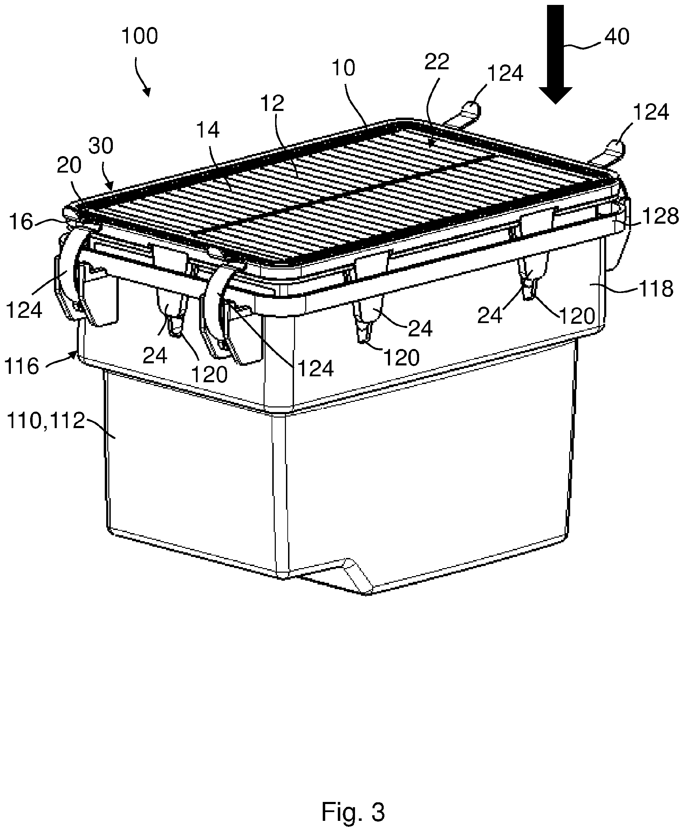

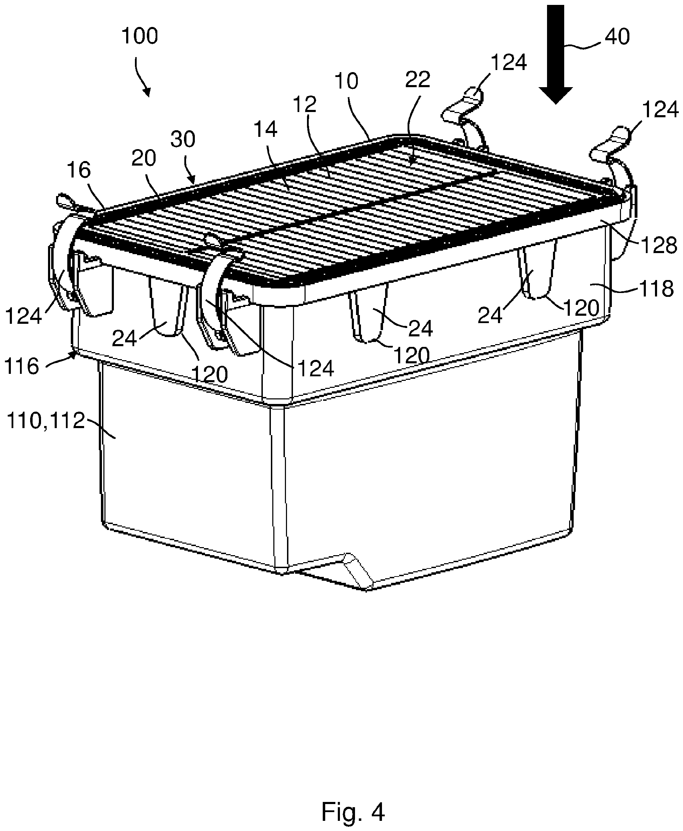

Figure 3 depicts the filter element 10 according to Figure 1 during a mounting process into the first housing part 112, whereas in Figure 4 the filter element 10 is fully inserted into the first housing part 112.

In Figure 3 the filter element 10 is partly inserted into the first housing part 112. The slots of the counter elements 120 are not yet fully closed by the structure elements 10 of the filter element 10, whereas in Figure 4 the slots of the counter elements 120 are fully closed by the structure elements 10 of the filter element 10. Thus the housing 110 is sealed against the environment. Advantageously the housing 110 is also stiffened as the structure elements 24 of the filter element 10 also contribute to stiffening of the housing 110 by the close cooperation with the counter elements 120 of the first housing part 112.

In Figure 5 a filter system 100 according to an embodiment of the invention is depicted with a filter element 10 inserted and the housing 100 closed.

The housing 110 of the filter system 100 comprises the first housing part 112 and the second housing part 114. A fluid inlet 102 is formed in the first housing part 112, a fluid outlet 108 is formed in the second housing part 114.

The second housing part 114 is provided with a protruding edge 122 overlapping the first housing part 112 when mounted on top of the first housing part 112.

Four snap hooks 124, two on each front side 130, are provided on the first housing part 112 for tightly closing the housing 110 by fitting into a corresponding groove 126 of the second housing part 114 when the housing 110 is in a closed state. In Figure 5 on the front side 130 to be seen in the Figure one snap hook 124 is closed whereas the other snap hook 124 is open.

### Reference numerals

- 10: filter element
- 12: filter body
- 14: filter medium
- 16: frame element
- 18: side wall
- 20: gasket
- 22: top region
- 24: structure element
- 26: groove
- 28: tapered shape
- 30: top side
- 32: cirumference wall
- 34: front side
- 40: mounting direction
- 50: circumference
- 100: filter system
- 102: fluid inlet
- 108: fluid outlet
- 110: housing
- 112: first housing part
- 114: second housing part
- 116: receiving part
- 118: wall
- 120: counter element
- 122: protruding edge
- 124: snap hook
- 126: groove
- 128: flange
- 130: front side

## Claims

1. A filter system (100), in particular an air filter system (100), comprising:
a housing (110) comprising a first housing part (112) and a second housing part (114);
a fluid inlet (102) formed in the first housing part (112);
a fluid outlet (108) formed in the second housing part (114); and
a filter element (10) being accommodated in the housing (110), and comprising:
a filter body (12) with a filter medium (14) enclosed by a circumferential frame element (16); and
structure elements (24) protruding from a circumference (50) of the filter element (10), the structure elements (24) comprising grooves (26) respectively in circumference walls (32) of the structure elements (24),
wherein the first housing part (112) comprises a receiving part (116) for receiving the filter element (10), the receiving part (116) comprising counter elements (120) respectively corresponding to the structure elements (24), and the counter elements (120) being breakthroughs that are arranged circumferentially on and formed through a wall (118) of the receiving part (116), and
wherein the grooves (26) included in the structure elements (24) are for receiving edges of the breakthroughs of the counter elements (120) in a sealing manner when the filter element (10) is arranged in the receiving part (116).

2. The filter system according to claim 1, wherein the structure elements (24) are formed with a tapered shape (28) in a mounting direction (40).

3. The filter system according to any one of the preceding claims, wherein the second housing part (114) comprises a protruding edge (122) overlapping the first housing part (112) when mounted on top of the first housing part (112).

4. The filter system according to any one of the preceding claims, wherein the first housing part (112) further comprises one or more snap hooks (124) for closing the housing (110) by respectively fitting into one or more grooves (126) included in the second housing part (114).

5. The filter system according to any one of the preceding claims, wherein the structure elements (24) are integral with a side wall (18) at least partially surrounding the filter body (12), and/or are integral with the circumferential frame element (16).

## Patentansprüche

1. Filtersystem (100), insbesondere en Luftfiltersystem (100), umfassend:
ein Gehäuse (110), umfassend ein erstes Gehäuseteil (112) und ein zweites Gehäuseteil (114);
einen in dem ersten Gehäuseteil (112) gebildeten Fluideinlass (102);
einen in dem zweiten Gehäuseteil (114) gebildeten Fluidauslass (108); und
ein in dem Gehäuse (110) aufgenommenes Filterelement (10), und umfassend:
einen Filterkörper (12) mit einem von einem umlaufenden Rahmenelement (16) umschlossenes Filtermedium (14); und
von einem Umfang (50) des Filterelements (10) vorstehende Strukturelemente (24), wobei die Strukturelemente (24) jeweils Rillen (26) in Umfangswänden (32) der Strukturelemente (24) umfassen,
wobei der erste Gehäuseteil (112) einen Aufnahmeteil (116) zum Aufnehmen des Filterelements (10) umfasst, wobei der Aufnahmeteil (116) jeweils Gegenelemente (120) umfasst, die den Strukturelementen (24) entsprechen, und wobei die Gegenelemente (120) Durchbrüche sind, die in Umfangsrichtung an einer Wand (118) des Aufnahmeteils (116) angeordnet und durch diese hindurch geformt sind, und
wobei die in den Strukturelementen (24) beinhalteten Rillen (26) dazu dienen, die Kanten der Durchbrüche der Gegenelemente (120) auf abdichtende Weise aufzunehmen, wenn das Filterelement (10) in dem Aufnahmeteil (116) angeordnet ist.

2. Filtersystem nach Anspruch 1, wobei die Strukturelemente (24) mit einer konischen Form (28) in einer Montagerichtung (40) gebildet sind.

3. Filtersystem nach einem der obigen Ansprüche, wobei der zweite Gehäuseteil (114) eine vorstehende Kante (122) umfasst, die den ersten Gehäuseteil (112) überlappt, wenn er auf dem ersten Gehäuseteil (112) installiert ist.

4. Filtersystem nach einem der obigen Ansprüche, wobei das erste Gehäuseteil (112) ferner einen oder mehrere Schnapphaken (124) zum Schließen des Gehäuses (110) durch jeweiliges Einpassen in eine oder mehrere Rillen (126) umfasst, die in dem zweiten Gehäuseteil (114) enthalten sind.

5. Filtersystem nach einem der obigen Ansprüche, wobei die Strukturelemente (24) mit einer Seitenwand (18), die den Filterkörper (12) mindestens teilweise umgibt, und/oder mit dem umlaufenden Rahmenelement (16) integral ausgebildet sind.

## Revendications

1. Système de filtre (100), notamment un système de filtre à air (100), comprenant:
un boîtier (110) comprenant une première partie de boîtier (112) et une deuxième partie de boîtier (114);
une entrée de fluide (102) formée dans la première partie de boîtier (112);
une sortie de fluide (108) formée dans la deuxième partie de boîtier (114); et
un élément filtrant (10) logé dans le boîtier (110), et comprenant:
un corps de filtre (12) ayant un milieu filtrant (14) entouré d'un élément de cadre circonférentiel (16); et
des éléments structurels (24) faisant saillie à partir d'une circonférence (50) de l'élément filtrant (10), les éléments structurels (24) comprenant des rainures (26) respectivement dans les parois de circonférence (32) des éléments structurels (24),
la première partie de boîtier (112) comprenant un élément de réception (116) destiné à recevoir l'élément filtrant (10), l'élément de réception (116) comprenant des contre-éléments (120) correspondant respectivement aux éléments structurels (24), et les contre-éléments (120) étant des percées disposées circonférentiellement sur une paroi (118) de l'élément de réception (116) et réalisées par cette dernière.
les rainures (26) incluses dans les éléments structurels (24) étant destinées à recevoir les arêtes des percées des contre-éléments (120) de manière étanche lorsque l'élément filtrant (10) est disposé dans l'élément de réception (116).

2. Système de filtre selon la revendication 1, les éléments structurels (24) étant réalisés avec une forme conique (28) dans un sens de montage (40).

3. Système de filtre correspondant à l'une quelconque des revendications précédentes, la deuxième partie de boîtier (114) comprenant une arête saillante (122) chevauchant la première partie de boîtier (112) lorsqu'elle est montée sur le dessus de la première partie de boîtier (112).

4. Système de filtre correspondant à l'une quelconque des revendications précédentes, la première partie de boîtier (112) comprenant en outre un ou plusieurs crochets d'encliquetage (124) destinés à fermer le boîtier (110) en s'insérant respectivement dans une ou plusieurs rainures (126) incluses dans la deuxième partie de boîtier (114).

5. Système de filtre correspondant à l'une quelconque des revendications précédentes, les éléments structurels (24) étant solidaires d'une paroi latérale (18) entourant au moins partiellement le corps de filtre (12), et/ou solidaires de l'élément de cadre circonférentiel (16).
